# EUROPÄISCHE PATENTSCHRIFT

(11) **EP 1 307 318 B1**
(45) Veröffentlichungstag und Bekanntmachung des Hinweises auf die Patenterteilung: **10.08.2011**
(21) Anmeldenummer: 01947415.4
(22) Anmeldetag: 28.06.2001
(51) Int. Cl.: B23Q 15/00

(54) **GENERIERUNG VON FRÄSPROGRAMMEN ZUR UMLAUFENDEN FÜNFACHSIGEN BEARBEITUNG VON TURBINENSCHAUFELN**
METHOD FOR CONTROLLING THE WORKING MOVEMENT OF A MILLING CUTTER
PROCEDE DE COMMANDE DU MOUVEMENT D'ENLEVEMENT DE COPEAUX D'UN OUTIL DE FRAISAGE

(30) Priorität: 28.06.2000 DE 10031441
(43) Veröffentlichungstag der Anmeldung: 07.05.2003
(73) Patentinhaber: OPEN MIND Technologies AG, 82234 Wessling (DE)
(72) Erfinder: KOCH, Josef, 81379 München (DE)
(74) Vertreter: Grape & Schwarzensteiner
(86) Internationale Anmeldenummer: PCT/EP2001/007370
(87) Internationale Veröffentlichungsnummer: WO 2002/000389

(56) Entgegenhaltungen:
- EP-A- 1 034 865
- US-A- 4 031 809

## Beschreibung

Die Erfindung bezieht sich auf ein Verfahren zum Steuern der Arbeitsbewegung eines Fräswerkzeugs zur materialabtragenden Bearbeitung eines Materialblocks gemäß einer vorgegebenen Werkstücksform, deren Oberfläche eine eine gedachte Achse umschließende Mantelfläche aufweist, bei dem ein zur materialabtragenden Einwirkung auf den Materialblock dienender, um eine Rotationsachse rotierender Einwirkungsbereich des Fräswerkzeugs in Bezug auf den Materialblock eine Bearbeitungsbahn durchläuft.

Derartige Werkstücksformen treten insbesondere bei Turbinenschaufeln für Wasserturbinen, Dampfturbinen, Flugzeugturbinen oder auch von Propellern auf. Deren angeströmte flügelartige Mantelfläche, die sich längs der gedachten Achse erstreckt, geht an mindestens einem ihrer axialen Enden in ein Einspannstück über, das zur Mantelfläche hin durch eine Seitenfläche begrenzt ist. Durch den hohen Bedarf an Turbinenschaufeln besteht die Notwendigkeit, die Dauer der Bearbeitung zu minimieren, was die Generierung von optimierten Bearbeitungsbahnen erforderlich macht. Die verfügbaren Software-Programme zur Generierung von Bearbeitungsbahnen sind dafür nur unzureichend ausgelegt und haben zudem den Nachteil, dass sie die durch moderne CAD-Systeme erzeugten, immer komplexer werdenden CAD-Daten, welche die vorgegebene Werkstücksform beschreiben, nicht verarbeiten können.

Die EP-A-1 034 865, die Stand der Technik nach Artikel 54 (3) EPÜ 1973 ist, schlägt ein Fräsverfahren vor, bei welchem das Fräswerkzeug entlang einer kontinuierlichen spiralförmigen Führungsbahn von der Außenkontur eines Rohteils zur Kontur einer Turbinenschaufel geführt und unter stetigem Materialabtrag eine kontinuierliche Gestaltänderung vom Rohteil zur Turbinenschaufel erreicht werden soll, wobei das Fräswerkzeug sehr wenig oder gar nicht durch die Luft geführt wird.

Die US-4,031,809 offenbart ein Fräsverfahren, welches mit der Halterung des Fräswerkzeuges zum optimierten Feinfräsen von Turbinenschaufeln oder Propellern befasst ist, wobei eine Bahnführung gewünscht wird, die im Wesentlichen in Richtung der maximalen querverlaufenden Steifigkeit des Werkstückes verlaufen soll.

Der Erfindung liegt die Aufgabe zugrunde, ein Verfahren der eingangs genannten Art zu schaffen, das eine optimierte Bearbeitung derartiger Werkstücksformen, insbesondere Turbinenschaufeln und Propellern, ermöglicht.

Diese Aufgabe wird auf überraschend einfache Weise durch die Merkmale der Ansprüche 1 und 12 gelöst.

Das erfindungsgemäße Verfahren eignet sich insbesondere zur Schruppbearbeitung des rohen Materialblocks, mit der dessen Material bis auf ein vorgebbares Aufmaß, d.h. einen vorgegebenen Materialüberstand über das Sollmaß der zu erzielenden Mantelfläche, abgetragen wird. Zumeist handelt es sich bei dem rohen Materialblock um einen prismatischen Block, aus dem die Werkstücksform herausgearbeitet werden muss. Das Fräswerkzeug läuft dabei in Bezug auf die gedachte Achse um und nähert sich materialabtragend der Sollform der Mantelfläche von außen nach innen an. Dieser Vorgang wiederholt sich in de Richtung der gedachten Achse fortschreitend, so dass das Material nacheinander Scheibe für Scheibe bis zur Annäherung an die gewünschte Sollform der Mantelfläche abgetragen wird.

Weiterhin eignet sich das erfindungsgemäße Verfahren insbesondere für die Schlichtbearbeitung, durch die die Sollform der Mantelfläche erzeugt wird. Der materialabtragende Einwirkungsbereich des Fräswerkzeugs, bei dem es sich in diesem Fall vorzugsweise um die spanende Stirnfläche eines Schaftfräsers mit Eckenradius handelt, folgt dabei in Umlaufrichtung der Kontur der Mantelfläche und schreitet gleichzeitig in der Richtung der Achse mit vorzugsweise konstanter Vorschubgeschwindigkeit fort.

Schließlich eignet sich das erfindungsgemäße Verfahren insbesondere dazu, den Übergangsbereich von der Mantelfläche zu der jeweiligen Seitenfläche zu erzeugen, welche eine Anschluss-oder Befestigungsstelle der Turbinenschaufel oder des Propellers zu seiner Mantelfläche hin begrenzt. Durch eine geeignete Ausrichtung der Rotationsachse des Fräswerkzeugs in Bezug auf die Verbindungsstrecken zwischen der äußeren Randkurve und der inneren Bahnkurve kann von dem vorzugsweise halbkugelförmigen vorderen Ende des Fräswerkzeugs und der Mantelfläche des Fräswerkzeugs gleichzeitig umlaufend eine Stirnbearbeitung der Mantelfläche und eine Walzbearbeitung der Seitenfläche durchgeführt werden.

Vorteilhafte Ausgestaltungen des erfindungsgemäßen Verfahrens sind in den Ansprüchen 2 bis 11 und 13 bis 15 angegeben.

Bei dem erfindungsgemäßen Verfahren ist es zweckmäßig, dass der Durchlauf des Fräswerkzeugs durch die Bearbeitungsbahn durch eine Drehung des Materialblocks um die gedachte Achse bei in der Drehrichtung im Wesentlichen feststehendem Einwirkungsbereich des Fräswerkzeugs erzeugt wird.

Das Fräswerkzeug braucht dabei nur die zur Verfolgung der Bearbeitungsbahn erforderliche Bewegung der Richtung von außen nach innen, die zur gewünschten räumlichen Einstellung seiner Rotationsachse erforderlichen Schwenkbewegungen und die zur Verfolgung der Bearbeitungsbahn in der Richtung der gedachten Achse erforderliche Translationsbewegung auszuführen. Die Drehgeschwindigkeit des Materialblocks wird vorzugsweise derart gesteuert, dass die Schnittgeschwindigkeit beim Eingriff zwischen dem Einwirkungsbereich des Fräswerkzeugs und dem Materialblock längs der Bearbeitungsbahn konstant ist, was zur Folge hat, dass die Drehgeschwindigkeit variabel ist.

Weitere Merkmale, Einzelheiten und Vorteile der Erfindung ergeben sich aus der folgenden Beschreibung und der Zeichnung. Hierin zeigen:
- Fig. 1: eine schematische Darstellung der Einwirkung eines Fräswerkzeugs auf einen Materialblock zur Herstellung einer einer Turbinenschaufel entspre- chenden Werkstücksform,
- Fig. 2: eine Aufsicht auf die Turbinenschaufel quer zu ihrer Achse mit zur Bestim- mung von Bahnkurven des Fräswerkzeugs dienenden, quer zur Achse ver- laufenden Schnittebenen,
- Fig. 3: eine Ansicht einer in einer Schnittebene von Fig. 2 verlaufenden Bahnkurve,
- Fig. 4: eine Gesamtansicht der bei einer Schruppbearbeitung durchlaufenen Bahn- kurven,
- Fig. 5: eine Ansicht zur Erläuterung der räumlichen Einstellung der Drehachse des Fräswerkzeugs bei der Schruppbearbeitung,
- Fig. 6: eine Fig. 2 entsprechende Ansicht mit einer abweichenden Ausrichtung der Schnittebenen,
- Fig. 7: eine schematische Ansicht eines verwendeten Fräswerkzeugs,
- Fig. 8: eine durch die Schnittebenen von Fig. 2 oder 6 mit der Mantelfläche der Turbinenschaufel erzeugte Schnittkurve,
- Fig. 9: eine bei einer Schlichtbearbeitung durchlaufene Bearbeitungsbahn,
- Fig. 10: eine schematische Darstellung zur Erläuterung der räumlichen Einstellung der Drehachse des Fräswerkzeugs bei der Schlichtbearbeitung,
- Fig. 11: eine schematische Darstellung einer Turbinenschaufel in einem axialen Endbereich,
- Fig. 12: eine schematische Darstellung zur Erläuterung der Bildung von Bezugsvek- toren für die räumliche Einstellung der Rotationsachse des Fräswerkzeugs bei der Bearbeitung der Seitenfläche im Endbereich,
- Fig. 13: eine schematische Darstellung einer mittels der Bezugsvektoren von Fig. 12 gewonnenen umlaufenden Mittelpunktsbahn für ein Fräswerkzeug mit halb- kugelförmigem Endbereich,
- Fig. 14: eine aus der Kugelmittelpunktsbahn von Fig. 13 gewonnene Bearbeitungs- bahn mit mehreren Umläufen für eine Bearbeitung im Übergangsbereich,
- Fig. 15: eine schematische Darstellung eines für die Seitenflächenbearbeitung ge- eigneten Fräswerkzeugs und
- Fig. 16: eine schematische Darstellung zur Erläuterung einer Kollisionskorrektur.

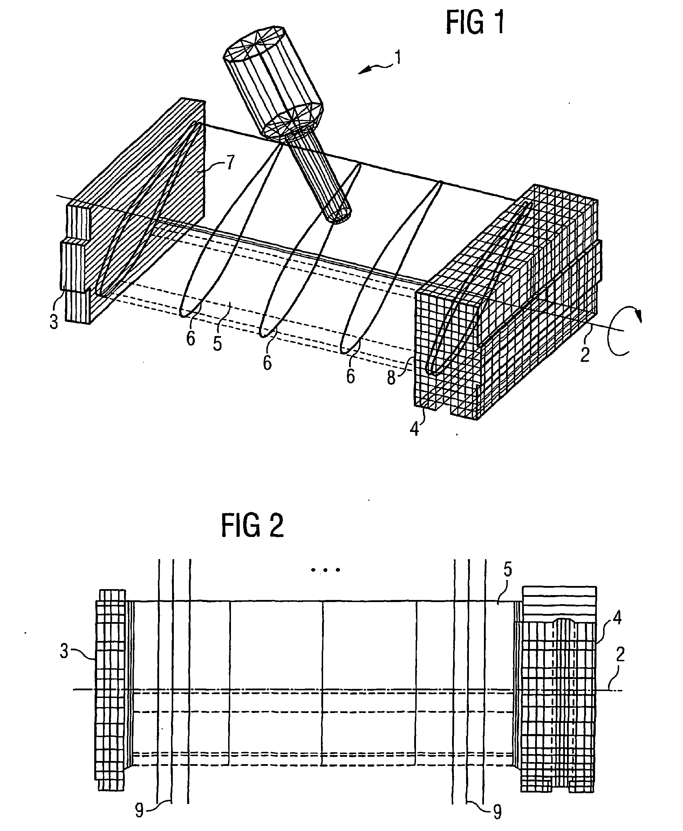

Fig. 1 lässt das Entstehen einer Turbinenschaufel durch eine spanabhebende Bearbeitung eines Materialblocks mittels eines Fräswerkzeugs 1 erkennen. Dabei wird der Materialblock um eine Achse 2 gedreht, wodurch das Fräswerkzeug 1 von der Außenseite des Materialblocks her nach innen fortschreitend den für die gewünschte Werkstücksform erforderlichen Materialabtrag bewirkt. Die axialen Endbereiche 3, 4 der herzustellenden Turbinenschaufel sind der ursprünglich prismatischen Form des unbearbeiteten Materialblocks folgend ebenfalls im wesentlichen prismatisch ausgebildet und können zur Festlegung der Turbinenschaufel in einem Schaufelrad dienen. Zwischen den beiden axialen Endbereichen 3, 4 erstreckt sich in der Richtung der Achse 2 und letztere umgebend eine die angeströmte Schaufelfläche bildende Mantelfläche 5, deren zur Achse 2 senkrechte, tragflächenförmige Querschnittsform durch Randkurven 6 angedeutet ist.

Für die vollständige Bearbeitung der in Fig. 1 dargestellten Turbinenschaufel werden drei Arten von Bearbeitungsbahnen zur Verfügung gestellt, die im Dienste einer Zeitoptimierung entweder spiralartig oder helixartig verlaufen:
1. Spiralartige Schruppbearbeitung
   Durch die Schruppbearbeitung wird der Materialblock bis auf ein vorgegebenes Aufmaß, d. h. einen über die vorgegebene Werkstücksform bestehenden Materialüberstand, abgetragen. Bei dem unbearbeiteten Materialblock handelt es sich in der Regel um einen prismatischen Block, aus dem die Turbinenschaufel herausgearbeitet werden muß. Die Schruppbearbeitung nutzt eine spiralartig umlaufende Bewegung um die Achse 2, in der von außen nach innen materialabtragend in einem spiralartigen Umlauf eine Annäherung an die endgültige Werkstücksform erfolgt.
2. Helixartige Schlichtbearbeitung
   Die Schlichtbearbeitung erzeugt die endgültige Mantelfläche 5 der vorgegebenen Werkstücksform. Hierbei wird das Fräswerkzeug 1 längs der vorgegebenen Mantelfläche 5 mit Vorschubrichtung längs der Achse 2 helixförmig an der vorgegebenen Mantelfläche 5 entlanggeführt.
3. Aus Fig. 1 ist weiter erkennbar, dass die axialen Endbereiche 3, 4 jeweils eine an die Mantelfläche 5 anschließende Seitenfläche 7 bzw. 8 aufweisen. Die Bearbeitung dieser Seitenflächen 7, 8 erzeugt den gewünschten Übergang von der Mantelfläche 5 zu den axialen Endbereichen 3, 4. Hierbei wird gleichzeitig eine Stirnbearbeitung der Mantelfläche 5 und eine Walzbearbeitung der Seitenflächen 7, 8 in einer helixartig umlaufenden Bearbeitungsbahn vorgenommen.

Für die beiden erstgenannten Arten von Bearbeitungsbahnen, die der Schruppbearbeitung und der Schlichtbearbeitung dienen, wird die Mantelfläche 5 mit einer Vielzahl von Schnittebenen 9 geschnitten, die längs der Achse 2 voneinander beabstandet sind. In dem in Fig. 2 dargestellten Beispiel sind diese Schnittebenen 9 senkrecht zur Achse 2 ausgerichtet und unter gleichbleibendem gegenseitigen Abstand angeordnet. Jede der Schnittebenen 9 erzeugt daher mit der Mantelfläche 5 eine Schnittkurve, wie sie beispielsweise in Fig. 1 unter dem Bezugszeichen 6 dargestellt ist.

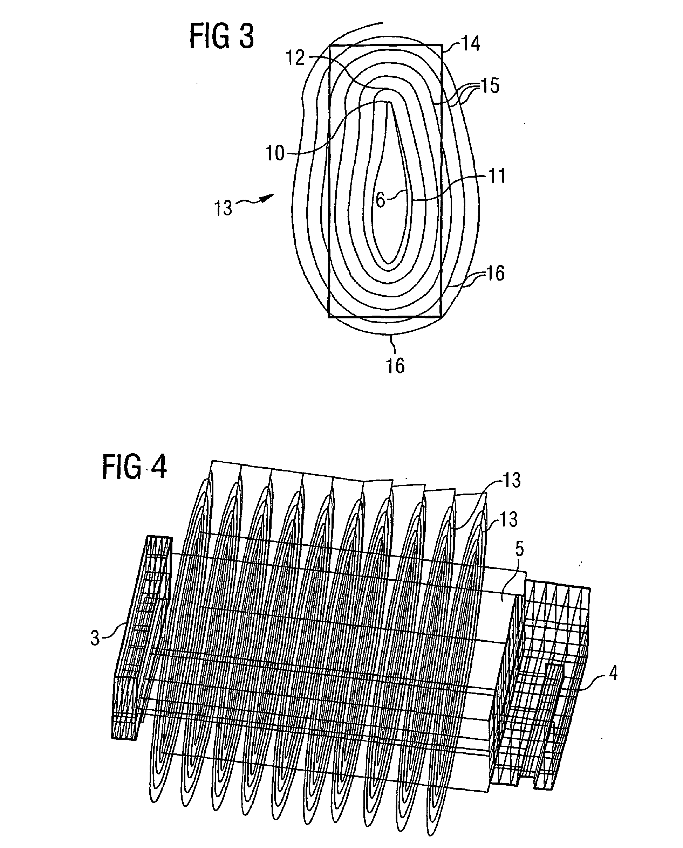

Für jede der Schnittkurven 6, die eine Randkurve der Mantelfläche 5 darstellen, wird gemäß Fig. 3 ausgehend von einem gewählten Punkt 10 der Schnittkurve 6 eine Interpolationskurve 11 berechnet, deren Abstand zur Schnittkurve 6 im Punkt 10 den Wert 0 aufweist und während eines vollen Umlaufs um die Achse 2 in ihrem dem Punkt 10 der Schnittkurve gegenüberliegenden Punkt 12 einen vorbestimmten Abstandswert errecht. Anschließend an den Punkt 12 werden nach außen hin fortschreitend weitere Umläufe angeschlossen, wobei zwischen benachbarten Umläufen gleichbleibend der vorbestimmte Abstandswert eingehalten wird. Auf diese Weise erhält man die in Fig. 3 dargestellte spiralartige Bahnkurve 13, die eine Vielzahl voller Umläufe um die Achse 2 aufweist.

Fig. 3 lässt weiter erkennen, dass auch die von jeder Schnittebene 9 mit der äußeren Oberfläche des prismatischen unbearbeiteten Materialblocks erzeugte Schnittkurve 14 be-stimmt wird. Die in Fig. 3 innerhalb der Schnittkurve 14 liegenden Abschnitte 15 der umlaufenden Bahnkurve 13 sind also diejenigen Abschnitte, in denen das Fräswerkzeug 1 mit dem Materialblock materialabtragend in Eingriff steht. Die Drehgeschwindigkeit um die Achse 2 wird derart gewählt, dass in diesen Abschnitten das Fräswerkzeug 2 die Bahnkurve 13 mit konstanter Schnittgeschwindigkeit durchläuft. Dagegen greift das Fräswerkzeug 1 in den außerhalb der Schnittkurve 14 gelegenen Abschnitten 16 der Bahnkurve 13 nicht an. In diesen Abschnitten wird daher zur zusätzlichen Einsparung von Bearbeitungszeit die Durchlaufgeschwindigkeit des Fräswerkzeugs 1 durch die Bahnkurve 13 erhöht.

Fig. 4 zeigt die Gesamtheit der spiraligen ebenen Bahnkurven 13, die in der Richtung der Achse 2 in zeitlicher Aufeinanderfolge jeweils von außen nach innen von dem materialabtragenden Einwirkungsbereich des Fräswerkzeugs 1 durchlaufen werden.

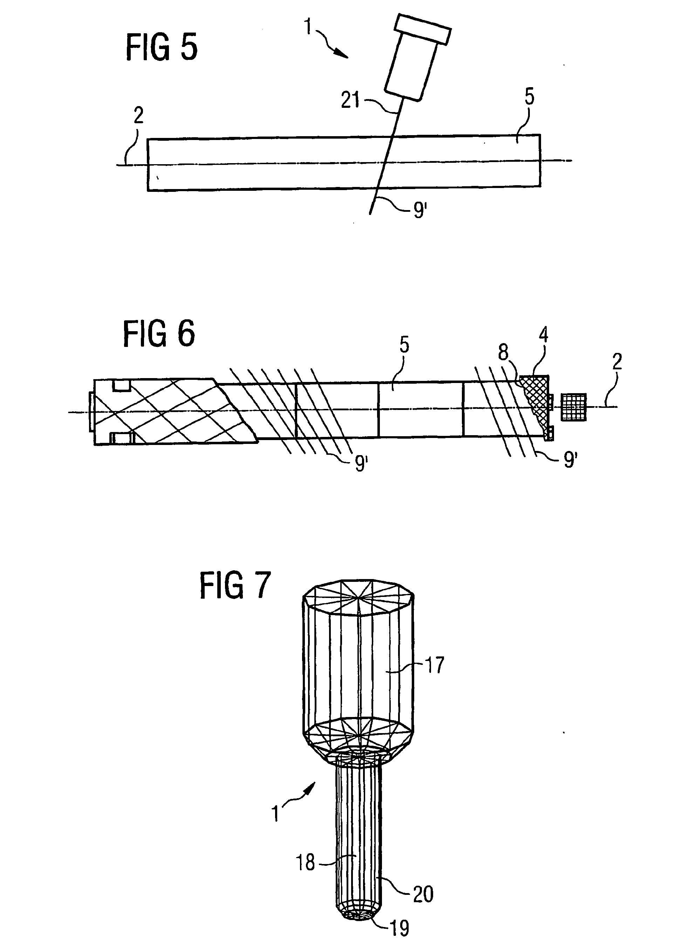

Statt der in Fig. 2 dargestellten orthogonalen Ausrichtung der Schnittebenen 9 in Bezug auf die Achse 2 kann es bei bestimmten Werkstücksformen vorteilhaft sein, gemäß Fig. 6 Schnittebenen 9' anzuwenden, die zur Achse 2 unter einem von 90° verschiedenen Winkel geneigt sind. Beispielsweise kann der Neigungswinkel der Schnittebenen 9' an den Neigungswinkel der Seitenflächen 7, 8 (vgl. Fig. 1 und Fig. 6) angepasst sein. Auch kann der Neigungswinkel der Schnittebenen 9' längs der Achse 2 veränderlich gewählt werden. Dies ist beispielsweise dann sinnvoll, wenn die beiden Seitenflächen 7, 8 an den axialen Enden der Mantelfläche 5 voneinander verschieden sind. In diesem Fall können beispielsweise die Neigungswinkel der Schnittebenen 9' längs der Achse 2 durch Interpolation zwischen den beiden Neigungswinkeln der Seitenflächen 7, 8 bestimmt werden. Prinzipiell können die Schnittebenen 9' jeden Neigungswinkel zur Achse 2 einnehmen, der von 0° bzw. 180° verschieden ist, d. h. dass jede Schnittebene 9' die Achse 2 jeweils in genau einem Punkt schneidet.

Für die vorstehend beschriebene spiralartige Schruppbearbeitung eignet sich das in Fig. 7 dargestellte Fräswerkzeug 1. Dieses weist einen zu seiner Rotationsachse rotationssymmetrischen Werkzeughalter 17 und einen daran anschließenden, zur Rotationsachse rotationssymmetrischen Werkzeugschaft 18 auf. Dessen freies Stirnende 19 und dessen daran angrenzende Mantelfläche 20 wirken materialabtragend. Der Übergang zwischen dem Stirnende 19 und der Mantelfläche 20 ist abgerundet. Es handelt sich also um einen Schaftfräser mit Eckenradius.

Wegen der in Fig. 4 verdeutlichen scheibenförmigen Materialabtragung in der Richtung der Schnittebenen 9, 9' muss bei der Schruppbearbeitung, wie Fig. 5 verdeutlicht, die Rotationsachse 21 des Fräswerkzeugs 1 so ausgerichtet werden, dass sie in der jeweiligen Schnittebene 9, 9' liegt. Hierzu werden in einer Vielzahl von Punkten längs jeder der Schnittkurven 6 Normalenvektoren zu der Mantelfläche 5 bestimmt und auf die jeweilige Schnittebene 9 bzw. 9' projiziert. Diese in den Schnittebenen 9 bzw. 9' liegenden projizierten Vektoren dienen sodann als Bezugsvektoren für die räumliche Einstellung der Rotationsachse 21.

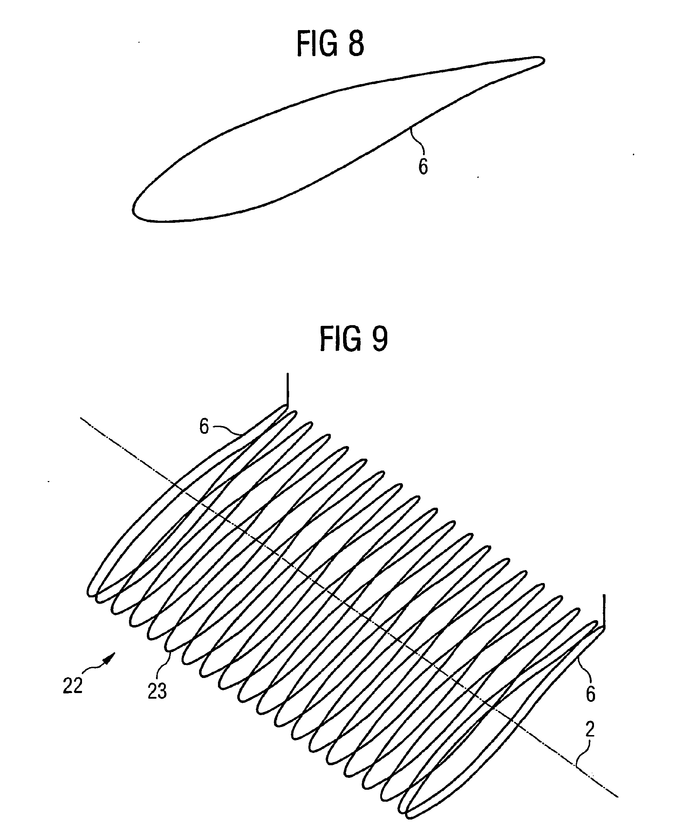

Nachdem durch die vorstehend beschriebene Schruppbearbeitung so viel Material des Materialblocks abgetragen worden ist, dass die Mantelfläche 5 einschließlich eines vorgegebenen Aufmaßes erzeugt worden ist, wird die Schlichtbearbeitung durchgeführt. Auch bei dieser werden zunächst in der vorstehend anhand von Fig. 2 und 6 beschriebenen Weise die Schnittebenen 9 bzw. 9' durch die Mantelfläche 5 gelegt und die dabei mit der Mantelfläche 5 entstehenden Schnittkurven 6 bestimmt. In Fig. 8 ist eine dieser Schnittkurven 6 noch einmal veranschaulicht. Hierzu ist anzumerken, dass in heute üblichen CAD-Systemen die Oberfläche der vorgegebenen Werkstücksform durch eine Menge zusammenhängender Einzelflächen oder Facetten, die über einem zweidimensionalen Parameterintervall definiert sind, beschrieben werden. Für die Berechnung der Schnittkurven 6 werden die Schnittebenen 9 bzw. 9' der Reihe nach mit allen Einzelflächen der Mantelfläche 5 geschnitten. Dabei ist es unerheblich, wie die ISO-Kurven der Mantelfläche 5 verlaufen. Es ist nicht erforderlich, dass die ISO-Kurven der Einzelflächen zusammenhängend angeordnet sind. Die durch die Schnittebenen 9 bzw. 9' und die Einzelflächen bestimmten Schnittkurvenabschnitte werden dann zur Bildung der vollständigen Schnittkurve 6 aneinandergehängt. Dabei wird darauf geachtet, dass bis auf eine vorgebbare Toleranz, die zumeist zwischen 0,1 und 0,01 mm liegt, die durch Aneinanderhängung gebildete Schnittkurve 6 eine ebene, geschlossene Kurve ist.

Zur Herstellung der bei der Schlichtbearbeitung der Mantelfläche 5 insgesamt durchlaufenen helixartigen Bearbeitungsbahn 22, die in Fig. 9 veranschaulicht ist, wird jeweils zwischen zwei benachbarten Schnittkurven 6 durch Interpolation eine um die Achse 2 umlaufende Raumkurve 23 bestimmt. Die in Achsrichtung aufeinanderfolgenden Raumkurven hängen aneinander und bilden zusammen mit den beiden Schnittkurven 6 an den beiden axialen Enden der Mantelfläche 5 die gesamte Bearbeitungsbahn 22.

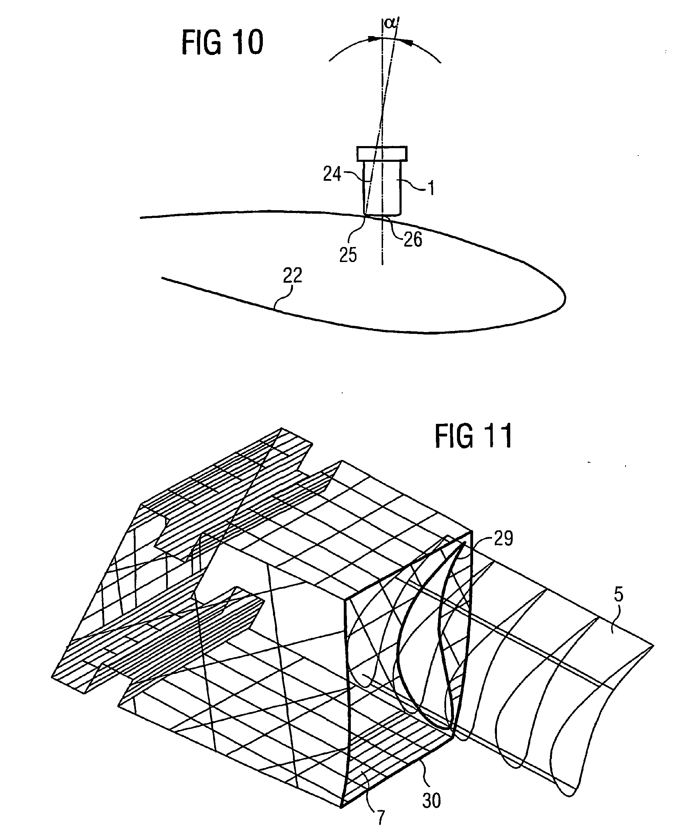

Zur Bestimmung der räumlichen Einstellung der Rotationsachse 21 des Fräswerkzeugs 1, bei dem es sich beispielsweise um den in Fig. 7 dargestellten Schaftfräser mit Eckenradius handeln kann, werden in einer Vielzahl längs der Schnittkurven 6 gelegener Punkte die Normalenvektoren zu der Mantelfläche 5, d. h. den sie beschreibenden Einzelflächen bzw. Facetten, bestimmt. In Fig. 10 ist mit dem Bezugszeichen 24 die einem dieser Normalenvektoren entsprechende Richtungsachse bezeichnet. Weiter veranschaulicht Fig. 10 einen Sturzwinkel α, der vom Anwender des Verfahrens vorgegeben werden kann und den Winkel beschreibt, den die Rotationsachse 21 des Fräswerkzeugs 1 gegenüber d Richtungsachse 24 in der jeweiligen Schnittebene 6 annimmt. Hierbei ist anzumerken, dass wie aus Fig. 10 ersichtlich ist, der Eingriffspunkt 25 zwischen dem materialabtragenden Einwirkungsbereich des Fräswerkzeugs 1 und der Bearbeitungsbahn 22 von einem beispielsweise an der Spitze des Fräswerkzeugs 1 auf dessen Rotationsachse 21 angenommenen Werkzeugreferenzpunkt infolge der Einstellung des vorgegebenen Sturzwinkels α abweicht, was bei der Ermittlung der Position des Werkzeugreferenzpunkts 26 berücksichtigt wird.

Weiter ist anzumerken, dass bei der Schlichtbearbeitung die räumliche Einstellung der Rotationsachse 21 des Fräswerkzeugs 1 bedingt durch den räumlichen Verlauf der Mantelfläche 5 im allgemeinen nicht in den Schnittebenen 6 verläuft, was bei der vorstehend beschriebenen Schruppbearbeitung in der anhand von Fig. 5 beschriebenen Weise vermieden wurde. Dort kann ebenfalls ein Sturzwinkel α vorgegeben werden, doch liegt dieser in der jeweiligen Schnittebene 9 bzw. 9'.

Schließlich ist anzumerken, dass die Bewegungsführung des Fräswerkzeugs 1 in der Nähe der Enden der helixartigen Bearbeitungsbahn 22 nicht zu Kollisionen mit den Seitenflächen 7, 8 der Turbinenschaufel führen darf. Zu diesem Zweck wird eine Berechnung durchgeführt, in der das Fräswerkzeug 1 entlang seiner Rotationsachse 21 in deren vorgesehener räumlicher Einstellung an die Mantelfläche 5 herangeführt wird. Sofern diese Berechnung ergibt, dass der Werkzeughalter 17 oder der Werkzeugschaft 18 die Seitenfläche 7 oder 8 berührt, wird eine Kollision angenommen und eine geeignete Korrektur der Bewegungsführung durchgeführt.

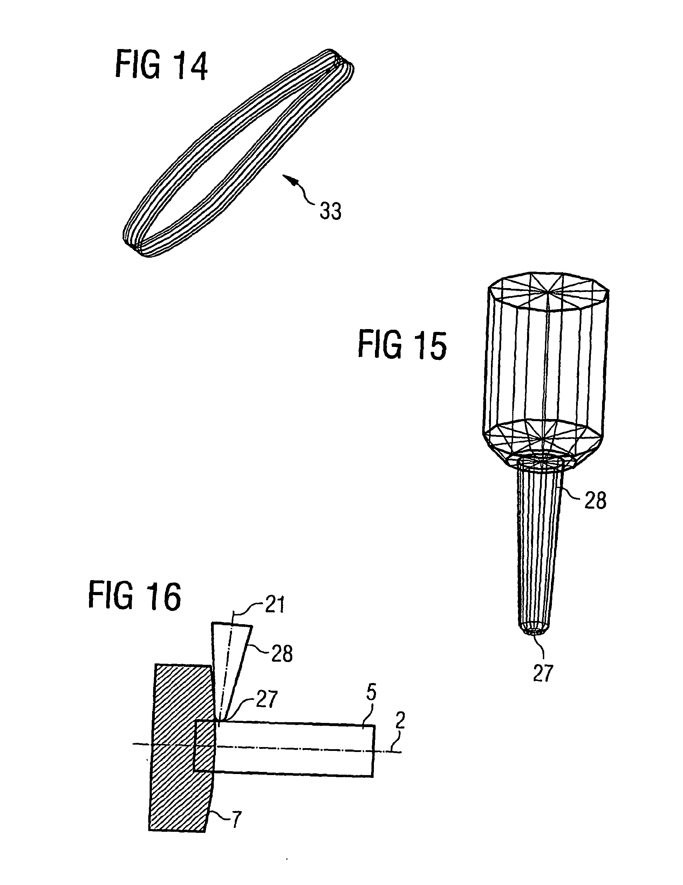

Durch die helixartige Seitenwandbearbeitung soll der Übergangsbereich zwischen der Mantelfläche 5 und der jeweiligen Seitenfläche 7, 8 umlaufend bearbeitet und gleichzeitig die Seitenfläche 7 bzw. 8 mitbearbeitet werden. Da in diesem Fall die Bewegungsführung des Fräswerkzeugs 1 an den Verlauf der Seitenflächen 7 bzw. 8 angepasst sein muß, kann im Unterschied zu der vorstehend beschriebenen Schruppbearbeitung und Schlichtbearbeitung die räumliche Einstellung der Rotationsachse 21 des Fräswerkzeugs 1 nicht mehr aus den Normalenrichtungen der Mantelfläche 5 hergeleitet werden. Ferner ist wegen der im allgemeinen erforderlichen Schrägstellung der Rotationsachse 21 gegenüber der Mantelfläche 5 der Einsatz eines Kugelfräsers zweckmäßig. Ein solcher ist schematisch in Fig. 15 dargestellt. Sein materialabtragender Einwirkungsbereich weist einen in Form einer Halbkugel ausgebildeten freien Endbereich 27 auf. Die daran anschließende, die Rotationsachse umgebende Mantelfläche 28 des Schaftes ist vorzugsweise konisch ausgebildet. Hierdurch können für eine Walzbearbeitung der Seitenflächen 7, 8 optimale Schnittkräfte erreicht werden.

Aus den die Werkstücksform beschreibenden CAD-Daten wird zunächst die in Fig. 11 dargestellte Schnittkurve 29 zwischen der Mantelfläche 5 und der Seitenfläche 7 bestimmt. Ferner wird die die betreffende Seitenfläche 7 außen begrenzende Randkurve 30 bestimmt.

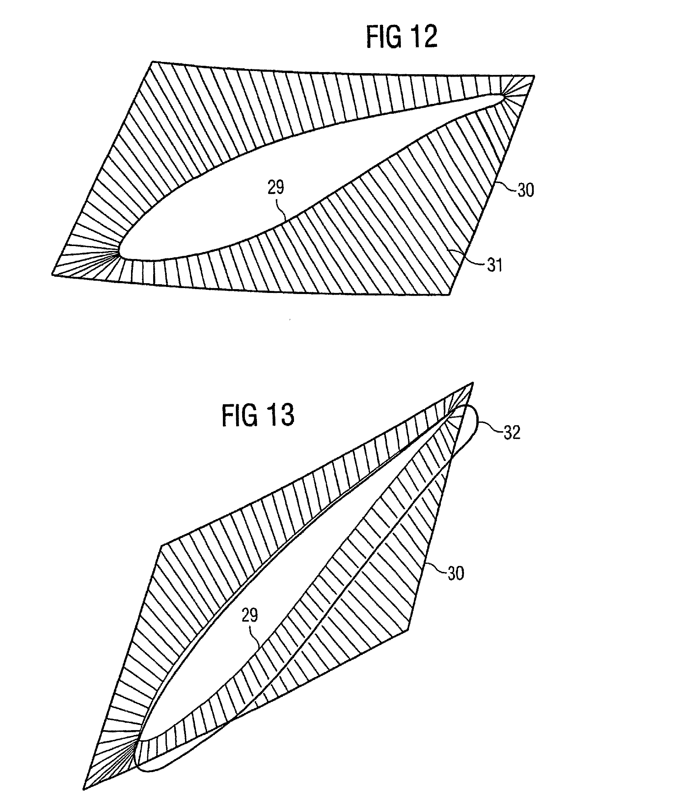

Zur Ermittlung einer Bezugsrichtung für die räumliche Ausrichtung der Rotationsachse des Fräswerkzeugs 1 werden die innere Schnittkurve 29 und die äußere Randkurve derart in einem gemeinsamen Parameterintervall parameterisiert, dass einander entsprechende Punkte der inneren Schnittkurve 29 und der äußeren Randkurve 30 jeweils durch eine Verbindungsstrecke 31 (siehe Fig. 12) miteinander verbunden sind, die auf der inneren Schnittkurve 29 senkrecht steht. Die solchermaßen berechneten Verbindungsstrecken 31 werden sodann von der Sollform der Seitenfläche 7 bzw. 8 weg in Richtung der Achse 2 um den Radius des halbkugeligen Endbereichs 27 des Fräswerkzeugs 1, ggf. zusätzlich um ein vorgegebenes Aufmaß, versetzt. Die solchermaßen versetzten Verbindungsstrekken 31 bestimmen eine Achse, längs der der Mittelpunkt des halbkugeligen Endbereichs 27 des Fräswerkzeugs 1 zur Mantelfläche 5 hin geführt werden kann, bis sie von dem halbkugeligen Endbereich 27 berührt wird. Hierdurch ergibt sich die in Fig. 13 mit dem Bezugszeichen 32 bezeichnete Führungsbahn für den Mittelpunkt des halbkugeligen Endbereichs 27. Als Bezugsvektor für die räumliche Einstellung der Rotationsachse 21 bei einer Führung des Mittelpunktes des halbkugeligen Endbereichs 27 auf dieser Führungsbahn 32 dient die Richtung der Verbindungsstrecken 31.

Die solchermaßen berechnete Führungsbahn 32 für den Mittelpunkt des halbkugeligen Endbereichs 27 eignet sich bereits als Führungsbahn für das Fräswerkzeug 1 in der Nähe der Seitenflächen 7 bzw. 8, weil dann der halbkugelige Endbereich 27 gleichzeitig die Mantelfläche 5 und die Verbindungsstrecken 31, welche die Seitenflächen 7 bzw. 8 angenähert aufspannen, berührt.

Für eine vollständige Bearbeitung des Übergangsbereichs muss ein Anschluss zur Schlichtbearbeitung der Mantelfläche 5 hergestellt werden. Dies erfolgt dadurch, dass ie vorstehend berechnete Führungsbahn 32 für den Mittelpunkt des halbkugeligen Endbereichs 27 des Fräswerkzeugs 1 mehrfach um einen vorgegebenen Zustellabstand in der Richtung der Achse 2 versetzt wird. Aus diesen parallel versetzten Bahnen wird nun durch Interpolation eine zusammenhängende helixartige Bahn erzeugt, die an ihrem Anfang und ihrem Ende durch die Führungsbahn 32 bzw. ihr am weitesten parallelversetztes Abbild ergänzt wird.

Das Ergebnis ist die in Fig. 14 dargestellte zusammenhängende umlaufende, helixartige Bahn 33 für den Kugelmittelpunkt des halbkugeligen Endbereichs 27 des Fräswerkzeugs 1. Die räumliche Ausrichtung der Rotationsachse 21 wird ebenfalls interpoliert. Entlang der dadurch gewonnenen Anstellrichtungen wird der halbkugelige Endbereich 27 wieder auf die Mantelfläche 5 zubewegt, da sich die Form einer komplex gekrümmten Werkstücksform in diesem Bereich ständig ändern kann. Um sicherzustellen, dass der halbkugelige Endbereich 27 stets kollisionsfrei die Oberfläche der Werkstücksform berührt, wird der Berührpunkt entlang dieser Ansteilrichtungen neu berechnet.

Da durch die vorstehenden Berechnungen sichergestellt wurde, dass der halbkugelige Endbereich 27 die Mantelfläche 5 stets berührt, kann die berechnete Bahn 33 für eine Stirnbearbeitung der Mantelfläche 5 herangezogen werden. Für die Walzbearbeitung der Seitenflächen 7 bzw. 8 mittels der Mantelfläche 28 des Fräswerkzeugs 1 (Fig. 15) muss noch die räumliche Einstellung der Rotationsachse 21 derart berechnet werden, dass sich die konische Mantelfläche 28 des Fräswerkzeugs 1 längs der Seitenfläche 7 bzw. 8 bewegt.

Zwar können die Seitenflächen 7, 8, insbesondere wenn sie komplex gekrümmt sind, nicht in voller Genauigkeit bearbeitet werden. Vielmehr wird nur eine Regelform erzeugt, die durch die Verbindungsstrecken 31 zwischen der inneren Schnittkurve 29 und der äußeren Randkurve 30 bestimmt ist.

Die räumlichen Einstellungen der Rotationsachse 21 können jedoch derart berechnet werden, dass die vorgegebene Idealform der Seitenflächen 7 bzw. 8 in einer unabhängigen Nachbearbeitung unter Wegnahme von nur noch sehr wenig Restmaterial erzeugt werden kann. Bei geringeren Genauigkeitsanforderungen ist die Nachbearbeitung oft überhaupt nicht notwendig. In jedem Fall ist aber der Aufwand für die Nachbearbeitung sehr gering.

Als Bezugsvektoren für die räumliche Einstellung der Rotationsachse 21 dienen die vorstehend berechneten Verbindungsstrecken 31. Diese werden nun, wie in Fig. 16 angedeutet, um den halben Konuswinkel der konischen Mantelfläche 28 in Richtung auf die Achse 2 gekippt und zum anderen in bezug auf die Umlaufrichtung um den Wert des vorgegebenen Sturzwinkels α gekippt. Die durch diese Kippungen gewonnenen Vektoren erzeugen die Regelfläche, die durch die innere Schnittkurve 29, die äußere Randkurve 30 und die sich dazwischen erstreckenden Verbindungsstrecken 31 aufgespannt wird.

Um zu verhindern, dass bei einer Bearbeitung gemäß der Regelfläche mehr Material abgetragen wird, als der tatsächlich vorgegebenen Werkstücksform entspricht, wird vorher eine Berechnung durchgeführt, mit der geprüft wird, ob zwischen der tatsächlichen Form der Seitenfläche 7 bzw. 8 und der konischen Mantelfläche 28 des Fräswerkzeugs 1 eine Kollision auftritt. Wenn dies der Fall ist, wird die Rotationsachse 21 weiter in Richtung auf die Achse 2 gekippt. Durch diesen iterativen Kollisionstest ergibt sich schließlich eine räumliche Einstellung, durch die die tatsächlich vorgegebene Form der Seitenfläche 7 bzw. 8 nicht verletzt wird.

Aus der vorstehenden Beschreibung wird deutlich, dass das erfindungsgemäße Verfahren Programme für eine fünfachsige Fräsbearbeitung zur Verfügung stellt, die eine optimierte Bearbeitung von insbesondere Turbinenschaufeln und Propellern ermöglichen.

### Verzeichnis der Bezugszeichen

| | |
|---|---|
| 1 | Fräswerkzeug |
| 2 | Achse |
| 3, 4 | axiale Endbereiche |
| 5 | Mantelfläche |
| 6 | Randkurven |
| 7, 8 | Seitenflächen |
| 9, 9' | Schnittebenen |
| 10 | Punkt der Schnittkurve |
| 11 | Interpolationskurve |
| 12 | Punkt der Interpolationskurve |
| 13 | Bahnkurve |
| 14 | Schnittkurve |
| 15 | innere Abschnitte |
| 16 | äußere Abschnitte |
| 17 | Werkzeughalter |
| 18 | Werkzeugschaft |
| 19 | Stirnende |
| 20 | Mantelfläche |
| 21 | Rotationsachse |
| 22 | Bearbeitungsbahn |
| 23 | Raumkurve |
| 24 | Richtungsachse |
| 25 | Eingriffspunkt |
| 26 | Werkzeugreferenzpunkt |
| 27 | halbkugeliger Endbereich |
| 28 | Mantelfläche |
| 29 | Schnittkurve |
| 30 | Randkurve |
| 31 | Verbindungsstrecke |
| 32 | Mittelpunktsbahn |
| 33 | Bahn |

## Patentansprüche

1. Verfahren zum Steuern der Arbeitsbewegung eines Fräswerkzeugs (1) zur materialabtragenden Bearbeitung eines Materialblocks gemäß einer vorgegebenen Werkstücksform, deren Oberfläche eine eine gedachte Achse (2) umschließende Mantelfläche (5) aufweist, bei dem ein zur materialabtragenden Einwirkung auf den Materialblock dienender, um eine Rotationsachse (21) rotierender Einwirkungsbereich (19, 20) des Fräswerkzeugs (1) in Bezug auf den Materialblock eine Bearbeitungsbahn durchläuft, wobei die Bearbeitungsbahn eine Vielzahl in der Richtung der Achse (2) benachbarter ebener Bahnkurven (13) aufweist, deren Bahnebenen (9, 9') längs der Achse (2) voneinander beabstandet sind, die Achse (2) jeweils in genau einem Punkt schneiden, mit der die Achse (2) umschließenden Mantelfläche (5) jeweils eine Schnittkurve (6) bestimmen und von dem Einwirkungsbereich (19, 20) des Fräswerkzeugs (1) nacheinander von außen nach innen durchlaufen werden, und deren jede eine Vielzahl von Umläufen um die Achse (2) aufweist sowie sich in der Durchlaufrichtung jeweils von der Außenseite des Materialblocks her zunehmend an die Schnittkurve (6) annähert, wobei die Schnittkurven (14) der Bahnebenen (9, 9') mit der äußeren Oberfläche des unbearbeiteten Materialblocks bestimmt werden, wobei außerhalb der Schnittkurven (14) liegende Abschnitte (16) und innerhalb der Schnittkurven (14) liegende Abschnitte (15) der Bahnkurven (13) gebildet werden und wobei die Durchlaufgeschwindigkeit des Einwirkungsbereichs (19, 20) des Fräswerkzeugs (1) in den außerhalb der Schnittkurven (14) liegenden Abschnitten (16) der Bahnkurven (13) gegenüber in den innerhalb der Schnittkurven (14) liegenden Abschnitten (15) der Bahnkurven (13) erhöht wird.

2. Verfahren nach Anspruch 1, **dadurch gekennzeichnet, dass** der Durchlauf des Einwirkungsbereiches (19, 20) des Fräswerkzeugs (1) durch die Bearbeitungsbahn durch eine Drehung des Materialblocks um die Achse (2) bei in der Drehrichtung im Wesentlichen feststehendem Einwirkungsbereich (19, 20) des Fräswerkzeugs (1) erzeugt wird.

3. Verfahren nach Anspruch 1 oder 2, **dadurch gekennzeichnet, dass** die Drehgeschwindigkeit des Materialblocks variabel gesteuert wird, derart, dass die Schnittgeschwindigkeit beim Eingriff zwischen dem Einwirkungsbereich (19, 20) des Fräswerkzeugs (1) und dem Materialblock längs der Bearbeitungsbahn konstant ist.

4. Verfahren nach einem der Ansprüche 1 bis 3, **dadurch gekennzeichnet, dass** die Bahnebenen (9) senkrecht zur Achse (2) angeordnet werden.

5. Verfahren nach einem der Ansprüche 1 bis 3, **dadurch gekennzeichnet, dass** die Bahnebenen (9') in einem Neigungswinkel zwischen 0° und 180° nicht-senkrecht zur Achse (2) angeordnet werden.

6. Verfahren nach einem der Ansprüche 1 bis 5, **dadurch gekennzeichnet, dass** längs jeder Schnittkurve (6) Normalenvektoren zu der Mantelfläche (5) bestimmt und auf die jeweilige Bahnebene (9, 9') projiziert werden und dass die projizierten Vektoren als Bezugsvektoren für die räumliche Einstellung der Rotationsachse (21) des Fräswerkzeugs (2) verwendet werden.

7. Verfahren nach einem der Ansprüche 1 bis 6, **dadurch gekennzeichnet, dass** ein bestimmter Wert für den Abstand zwischen benachbarten Umläufen jeder Bahnkurve (13) vorgegeben und ein innerer Umlauf (11) bestimmt wird, dessen Abstand zu der jeweiligen Schnittkurve (6) entgegen der Durchlaufrichtung ausgehend von einem Punkt (10) der jeweiligen Schnittkurve (6) von dem Wert Null bis zu dem vorgegebenen Wert anwächst und an den sich die nach außen folgenden Umläufe unter dem vorgegebenen gegenseitigen Abstand anschließen.

8. Verfahren nach einem der Ansprüche 1 bis 7, **dadurch gekennzeichnet, dass** die Durchlaufgeschwindigkeit des Einwirkungsbereichs (19, 20) des Fräswerkzeugs (1) durch die Bahnkurven (13) konstant vorgegeben wird.

9. Verfahren nach einem der Ansprüche 1 bis 8, **dadurch gekennzeichnet, dass** die Bearbeitungsbahn seine auf der Mantelfläche (5) verlaufende Bahnkurve (22) mit einer Vielzahl von Umläufen um die Achse (2) und einer in die Richtung der Achse (2) weisenden Steigung aufweist.

10. Verfahren nach Anspruch 9, **dadurch gekennzeichnet, dass** die Schnittkurven (6) der Mantelfläche (5) mit einer. Vielzahl in der Richtung der Achse (2) benachbarter Schnittebenen (9, 9'), welche die Achse (2) jeweils in genau einem Punkt schneiden, bestimmt und die einzelnen Umläufe jeweils als Interpolationskurve (23) zwischen benachbarten Schnittkurven (6) bestimmt werden.

11. Verfahren nach einem der Ansprüche 1 bis 10, **dadurch gekennzeichnet, dass** längs der Schnittkurven (6) Normalenvektoren zu der Mantelfläche (5) bestimmt und als Bezugsvektoren für die räumliche Einstellung der Rotationsachse (21) des Fräswerkzeugs (1) verwendet werden.

12. Verfahren zum Steuern der Arbeitsbewegung eines Fräswerkzeugs (1) zur materialabtragenden Bearbeitung eines Materialblocks gemäß einer vorgegebenen Werkstücksform, deren Oberfläche eine eine gedachte Achse (2) umschließende Mantelfläche (5) aufweist, bei dem ein zur materialabtragenden Einwirkung auf den Materialblock dienender, um eine Rotationsachse (21) rotierender Einwirkungsbereich (19, 20) des Fräswerkzeugs (1) in Bezug auf den Materialblock eine Bearbeitungsbahn durchläuft, insbesondere nach einem der Ansprüche 1 bis 11, bei dem die vorgegebene Werkstücksform an mindestens einem axialen Ende (3, 4) der die gedachte Achse (2) umschließenden Mantelfläche (5) eine von der Mantelfläche (5) aus nach außen gerichtete, von einer äußeren Randkurve (30) begrenzte Seitenfläche (7, 8) aufweist, **dadurch gekennzeichnet, dass** von Punkten auf einer der Schnittkurve (29) zwischen der Seitenfläche (7, 8) und der Mantelfläche (5) entsprechenden inneren Bahnkurve aus und senkrecht dazu sich zu der die Seitenfläche (7, 8) nach außen begrenzenden Randkurve (30) erstreckende Verbindungsstrecken (31) bestimmt und als Bezugsvektoren für die räumliche Einstellung der Rotationsachse (21) des Fräswerkzeugs (1) verwendet werden.

13. Verfahren nach Anspruch 12, **dadurch gekennzeichnet, dass** der materialabtragende Einwirkungsbereich des Fräswerkzeugs
(1) einen in der Form einer Halbkugel ausgebildeten Endbereich (27) aufweist und der auf der Rotationsachse (21) liegende Mittelpunkt der Halbkugel auf einer um die Achse
(2) umlaufenden Bahn (32) geführt wird, deren Abstand von der Mantelfläche (5) dem Radius der Halbkugel entspricht und die in der Richtung der gedachten Achse (2) gegen die jeweilige Verbindungsstrecke (31) um mindestens den Radius der Halbkugel versetzt ist.

14. Verfahren nach Anspruch 12 oder 13, **dadurch gekennzeichnet, dass** der materialabtragende Einwirkungsbereich des Fräswerkzeugs (1) einen seine Rotationsachse (21) umgebenden konischen Bereich (28) aufweist, der mit der Seitenfläche (7, 8) längs den Verbindungsstrecken (31) in Eingriff gebracht wird.

15. Verfahren nach einem der Ansprüche 1 bis 14, **dadurch gekennzeichnet, dass** der Durchlauf des Fräswerkzeugs (1) durch die Bearbeitungsbahn durch eine Drehung des Materialblocks um die gedachte Achse (2) bei in der Drehrichtung im wesentlichen feststehendem Einwirkungsbereich des Fräswerkzeugs (1) erzeugt wird.

## Claims

1. A method for controlling the working movement of a milling tool (1) for machining in a manner to remove material of a material block corresponding to a prespecified workpiece shape, the surface of which has an outside surface (5) surrounding a virtual axis (2), in which an area of action (19, 20) of the milling tool (1), said area of action serving to remove material from the material block and rotating around an axis of rotation (21), passes through a machining track with reference to the material block, in which the machining track has a plurality of planar path curves (13) adjacent in the direction of the axis (2), the track planes (9, 9') of which are spaced apart from one another along the axis (2), cross the axis (2) at exactly one point in each case, define a cutting curve (6) in each case with the outside surface (5) surrounding the axis (2) and are passed through sequentially from the outside inward by the area of action (19, 20) of the milling tool (1), and each of which has a plurality of cycle paths around the axis (2) and, in each case, approaches the cutting curve (6) increasingly from the outer side of the material block in the direction of passage, where the cutting curves (14) of the track planes (9, 9') are determined with the outer surface of the unmachined material block, where sections (16) lying outside the cutting curves (14) and sections (15) lying inside the cutting curves (14) are formed and where the speed of passage of the area of action (19, 20) of the milling tool (1) in the sections (16) of the path curves (13) lying outside the cutting curves (14) is increased compared to that in the sections (15) of the path curves (13) lying inside the cutting curves (14).

2. A method according to claim 1, **characterized in that** the passage of the area of action (19, 20) of the milling tool (1) through the machining track is created by a rotation of the material block around the axis (2) with an area of action (19, 20) of the milling tool (1) essentially fixed in the direction of rotation.

3. A method according to claim 1 or 2, **characterized in that** the speed of rotation of the material block is controlled in a variable manner in such a way that the cutting speed is constant along the machining track upon contact between the area of action (19, 20) of the milling tool (1) and the material block.

4. A method according to one of the claims 1 to 3, **characterized in that** the track planes (9) are arranged perpendicular to the axis (2).

5. A method according to one of the claims 1 to 3, **characterized in that** the track planes (9') are arranged non-perpendicularly at an angle between 0° and 180° with respect to the axis (2).

6. A method according to one of the claims 1 to 5, **characterized in that** along each cutting curve (6) normal vectors are determined in respect to the outside surface (5) and are projected on the respective track plane (9, 9') and that the projected vectors are used as reference vectors for spatial alignment of the axis of rotation (21) of the milling tool (2).

7. A method according to one of the claims 1 to 6, **characterized in that** a particular value is specified for the spacing between adjacent cycle paths of each path curve (13) and an inner cycle path (11) is determined, the spacing of which increases from zero to the prespecified value with respect to the particular cutting curve (6) opposite to the direction of passage starting from a point (10) of the particular cutting curve (6) and continues in the subsequent cycle paths toward the outside maintaining the prespecified mutual spacing.

8. A method according to one of the claims 1 to 7, **characterized in that** the speed of passage for the area of action (19, 20) of the milling tool (1) is kept constant by the path curves (13).

9. A method according to one of the claims 1 to 8, **characterized in that** the machining track has its path curve (22) running on the outside surface (5) with a plurality of cycle paths around the axis (2) and a slope in the direction of the axis (2).

10. A method according to claim 9, **characterized in that** the cutting curves (6) of the outside surface (5) are determined with a plurality of section planes (9, 9') adjacent in the direction of the axis (2) which cross the axis (2) at exactly one point in each case and the individual cycle paths are determined in each case as an interpolation curve (23) between adjacent cutting curves (6).

11. A method according to one of the claims 1 to 10, **characterized in that** normal vectors in respect to the outside surface (5) are determined along the cutting curves (6) and used as reference vectors for the spatial alignment of the axis of rotation (21) of the milling tool (1).

12. A method for controlling the working movement of a milling tool (1) for machining in a manner to remove material a material block corresponding to a prespecified workpiece shape, the surface of which has an outside surface (5) surrounding a virtual axis (2), in which an area of action (19, 20) of the milling tool (1), said area of action serving to remove material from the material block and rotating around an axis of rotation (21), passes through a machining track with reference to the material block, in particular according to one of the claims 1 to 11, in which the prespecified workpiece shape has on at least one axial end (3, 4) of the outside surface (5) surrounding the virtual axis (2) a lateral area (7, 8) oriented outward from the outside surface (5) and limited by an outer edge curve (30), **characterized in that**, starting from points on an inner track curve corresponding to the cutting curve (29) between the lateral area (7, 8) and the outside surface (5) and perpendicularly to it, connecting sections (31) extending to the edge curve (30) limiting outward the lateral area (7, 8) are defined and are used as reference vectors for spatial alignment of the axis of rotation (21) of the milling tool (1).

13. A method according to claim 12, **characterized in that** the area of action of the milling tool (1) for removing material has an end region (27) formed as a hemisphere, and the center point of the hemisphere lying on the axis of rotation (21) is guided on a track (32) running around the axis (2), the spacing of which from the outside surface (5) corresponds to the radius of the hemisphere and which is offset toward the respective connecting section (31) in the direction of the virtual axis (2) by at least the radius of the hemisphere.

14. A method according to claim 12 or 13, **characterized in that** the area of action of the milling tool (1) for removing material has a conical area (28) surrounding its axis of rotation (21), which is brought into contact with the lateral surface (7, 8) along the connecting sections (31).

15. A method according to one of the claims 1 to 14, **characterized in that** the passage of the milling tool (1) through the machining track is created by a rotation of the material block around the virtual axis (2) with an area of action of the milling tool (1) essentially fixed in the direction of rotation.

## Revendications

1. Procédé pour commander le mouvement de travail d'un outil de fraisage (1) destiné à l'usinage avec enlèvement de matière d'un bloc de matériau selon une forme prédéterminée d'une pièce à usiner, dont la surface présente une surface enveloppe (5) qui entoure un axe imaginaire (2), dans lequel une zone d'action (19, 20) de l'outil de fraisage (1), en rotation autour d'un axe de rotation (21) et servant à agir avec enlèvement de matière sur le bloc de matériau, parcourt une trajectoire d'usinage par référence au bloc de matière, ladite trajectoire d'usinage comprenant une pluralité de courbes de trajectoire planes (13) voisines dans la direction de l'axe (2), dont les plans de trajectoire (9, 9') sont écartés les uns des autres le long de l'axe (2), recoupent l'axe (2) respectivement exactement en un point, déterminent avec la surface enveloppe (5) qui entoure l'axe (2) respectivement une courbe de coupe (6) et sont parcourues par la zone d'action (19, 20) de l'outil de fraisage (1) les unes après les autres de l'extérieur vers l'intérieur, et dont chacune comporte une pluralité de révolutions autour de l'axe (2) et se rapproche progressivement de la courbe de coupe (6) dans la direction de parcours respectivement depuis la face extérieure du bloc de matériau, les courbes de coupe (14) des plans de trajectoire (9, 9') sont déterminées avec la surface extérieure du bloc de matériau non usiné, et des tronçons (16) situés à l'extérieur des courbes de coupe (14) et des tronçons situés à l'intérieur des courbes de coupe (14) des courbes de trajectoire (13) sont formés, et la vitesse de parcours de la zone d'action (19, 20) de l'outil de fraisage (1) dans les tronçons (16), situés à l'extérieur des courbes de coupe (14), des courbes de trajectoire (13) est augmentée par rapport à celle dans les tronçons (15), situés à l'intérieur des courbes de coupe (14), des courbes de trajectoire (13).

2. Procédé selon la revendication 1, **caractérisé en ce que** le parcours de la zone d'action (19, 20) de l'outil de fraisage (1) à travers la trajectoire d'usinage est engendré par une rotation du bloc de matériau autour de l'axe (2) tandis que la zone d'action (19, 20) de l'outil de fraisage (1) est sensiblement stationnaire dans la direction de rotation.

3. Procédé selon la revendication 1 ou 2, **caractérisé en ce que** la vitesse de rotation du bloc de matériau est commandée de manière variable de telle façon que, lors de l'attaque entre la zone d'action (19, 20) de l'outil de fraisage (1) et le bloc de matériau le long de la trajectoire d'usinage, la vitesse de coupe est constante.

4. Procédé selon l'une des revendications 1 à 3, **caractérisé en ce que** les plans de trajectoire (9) sont agencés perpendiculairement à l'axe (2).

5. Procédé selon l'une des revendications 1 à 3, **caractérisé en ce que** les plans de trajectoire (9') sont agencés sous un angle d'inclinaison entre 0° et 180° sans être perpendiculaires à l'axe (2).

6. Procédé selon l'une des revendications 1 à 5, **caractérisé en ce que** le long de chaque courbe de coupe (6) on détermine des vecteurs normaux à la surface enveloppe (5) et on les projette sur le plan de trajectoire respectif (9, 9'), et **en ce que** les vecteurs projetés sont utilisés comme vecteur de référence pour le réglage dans l'espace de l'axe de rotation (21) de l'outil de fraisage (2).

7. Procédé selon l'une des revendications 1 à 6, **caractérisé en ce que** l'on impose une valeur déterminée pour la distance entre des révolutions voisines de chaque courbe de trajectoire (13) et on détermine une révolution intérieure (11) dont la distance à la courbe de coupe respective (6) en sens opposé à la direction de parcours, en partant depuis un point (10) de la courbe de coupe respective (6), augmente depuis la valeur zéro jusqu'à la valeur prédéterminée, et les révolutions suivantes vers l'extérieur se raccordent à cette révolution intérieure avec la distance réciproque imposée.

8. Procédé selon l'une des revendications 1 à 7, **caractérisé en ce que** la vitesse de parcours de la zone d'action (19, 20) de l'outil de fraisage (1) à travers les courbes de trajectoire (13) est imposée à une valeur constante.

9. Procédé selon l'une des revendications 1 à 8, **caractérisé en ce que** la trajectoire d'usinage comprend sa courbe de trajectoire (22) s'étendant sur la surface enveloppe (5) avec une pluralité de révolutions autour de l'axe (2), et une pente dans la direction de l'axe (2).

10. Procédé selon la revendication 9, **caractérisé en ce que** les courbes de coupe (6) de la surface enveloppe (5) sont déterminées avec une pluralité de plans de coupe (9, 9') voisins en direction de l'axe (2), qui recoupent l'axe (2) respectivement exactement en un point, et les révolutions individuelles sont déterminées respectivement comme des courbes d'interpolation (23) entre des courbes de coupe voisines (6).

11. Procédé selon l'une des revendications 1 à 10, **caractérisé en ce que** l'on détermine le long des courbes de coupe (6) des vecteurs normaux à la surface enveloppe (5), et on les utilise comme vecteur de référence pour le réglage dans l'espace de l'axe de rotation (21) de l'outil de fraisage (1).

12. Procédé pour commander le mouvement de travail d'un outil de fraisage (1) destiné à l'usinage avec enlèvement de matière d'un bloc de matériau selon une forme prédéterminée de pièce à usiner, dont la surface comporte une surface enveloppe (5) qui entoure un axe imaginaire (2), dans lequel une zone d'action (19, 20) de l'outil de fraisage (1), en rotation autour d'un axe de rotation (21) et servant à agir avec enlèvement de matière sur le bloc de matériau, parcourt par référence au bloc de matériau une trajectoire d'usinage, en particulier selon l'une des revendications 1 à 11, dans lequel la forme prédéterminée de pièce à usiner, à au moins une extrémité axiale (3, 4) de la surface enveloppe (5) qui entoure l'axe imaginaire (2), comporte une surface latérale (7, 8) dirigée vers l'extérieur depuis la surface enveloppe (5) et limitée par une courbe de bordure extérieure (30), **caractérisé en ce que** l'on détermine des trajets de liaison (31) qui s'étendent depuis des points sur l'une des courbes de coupe (29) entre la surface latérale (7, 8) et la courbe de trajectoire intérieure correspondant à la surface enveloppe (5) et perpendiculairement à celle-ci, jusqu'à la courbe de bordure (30) qui limite la surface latérale (7, 8) vers l'extérieur, et on les utilise comme vecteurs de référence pour le réglage dans l'espace de l'axe de rotation (21) de l'outil de fraisage (1).

13. Procédé selon la revendication 12, **caractérisé en ce que** la zone d'action avec enlèvement de matière sur l'outil de fraisage (1) comprend une zone terminale (27) réalisé sous la forme d'une demi sphère, et le centre de la demi sphère situé sur l'axe de rotation (21) est guidé sur une trajectoire (32) en révolution autour de l'axe (2), dont la distance depuis la surface enveloppe (5) correspond au rayon de la demi sphère, et est décalé en direction de l'axe imaginaire (2) à l'encontre du trajet de liaison respectif (31), au moins du rayon de la demi sphère.

14. Procédé selon la revendication 12 ou 13, **caractérisé en ce que** la zone d'action avec enlèvement de matière sur l'outil de fraisage (1) comprend une zone conique (28) qui entoure son axe de rotation (21), qui est amenée en engagement avec la surface latérale (7, 8) le long des trajets de liaison (31).

15. Procédé selon l'une des revendications 1 à 14, **caractérisé en ce que** le parcours de l'outil de fraisage (1) à travers la trajectoire d'usinage est engendré par une rotation du bloc de matériau autour de l'axe imaginaire (2), tandis que la zone d'action de l'outil de fraisage (1) est essentiellement stationnaire en direction de rotation.
